# EUROPÄISCHE PATENTANMELDUNG

(11) **EP 2 261 433 A2**
(43) Veröffentlichungstag der Anmeldung: **15.12.2010**
(21) Anmeldenummer: 10005898.1
(22) Anmeldetag: 08.06.2010
(51) Int. Cl.: E04B 2/74

(54) **Trennwand**

(30) Priorität: 08.06.2009 DE 202009004902 U
(71) Anmelder: Ropimex R. Opel GmbH, 66538 Neunkirchen (DE)
(72) Erfinder: Zimmermann, Rolf, 66386 St. Ingbert (DE); Bratusa, Michael, 66564 Ottweiler (DE)
(74) Vertreter: Vièl, Christof

(57) **Zusammenfassung**

Die Erfindung betrifft eine Trennwand, deren eine Seitenkante an einer Wand oder dergleichen befestigbar ist, welche aus mindestens zwei Sichtschutzflächen besteht, die schwenkbar jeweils an einer Seitenkante mit Hilfe eines Scharniermechanismus verbunden sind.

Um eine Trennwand gemäß dem Oberbegriff zu schaffen, der in beide Richtungen jeweils um 360° faltbar ist und gleichzeitig auch im Scharnierbereich blickdicht ist, wird im Rahmen der Erfindung vorgeschlagen, daß die Sichtschutzflächen im oberen Seitenbereich jeweils einen vertikal nach unten weisenden Zapfen und im unteren Seitenbereich einen vertikal nach oben weisenden Zapfen aufweisen und wobei ein 8-förmiges Rohr vorgesehen ist, welches die Zapfen zweier benachbarter Sichtschutzflächen aufnimmt.

Die Zapfen sind somit in dem 8-förmigen Rohr drehbar angeordnet, wobei durch das so gebildete Scharnier eine Drehung zweier Sichtschutzflächen relativ zueinander um eine vertikale Achse um 360° ermöglicht wird. Gleichzeitig verhindert das zwischen den Sichtschutzflächen angeordnete 8-förmige Rohr ein Durchblicken durch den Scharnierbereich.

## Beschreibung

Die Erfindung betrifft eine Trennwand, deren eine Seitenkante an einer Wand oder dergleichen befestigbar ist, welche aus mindestens zwei Sichtschutzflächen besteht, die schwenkbar jeweils an einer Seitenkante mit Hilfe eines Scharniermechanismus verbunden sind.

Aus der CH 360 780 ist ein Paravent mit zwei Sichtschutzflächen bekannt, die relativ zueinander beweglich sind und jeweils einen Rahmen aufweisen, wobei das Verbindungsgelenk zwischen den beiden Sichtschutzflächen durch mindestens zwei lösbare elastische Elemente gebildet wird, welche S-formig ausgebildet sind und die senkrechten Elemente der beiden Rahmen miteinander verbinden. Die senkrechten Elemente der beiden Rahmen werden hierbei in das S-förmige Element eingedrückt. Die Rahmen tragen jeweils einen Sichtschutz, der beispielsweise aus Stoff besteht.

Die DE 199 42 771 A1 beschreibt eine Schirmwand, die aus einer Stofffläche besteht, die durch Versteifungsstäbe gespannt wird. Zur Herstellung dieser Schirmwand werden in die Stoffbahn über die Breite und/oder Länge schlauchartige Taschen eingearbeitet, die die Fläche der Schirmwand definieren. Die so eingegrenzte Fläche der Stoffbahn wird aus dieser herausgetrennt. In die schlauchartigen Taschen, die Ränder dieser Flächen bilden, werden Versteifungsstäbe eingeführt.

Aus der DE 690 26 107 T2 ist eine ein- und ausfahrbare Trennwand bekannt, deren eine Seitenkante an einer Wand oder dergleichen befestigbar ist, welche aus einer Reihe von paneelenförmigen Elementen besteht, die schwenkbar jeweils an benachbarten gleichartigen Elementen entlang einer Seitenkante mit Hilfe eines Scharniermechanismus verbunden sind und die eine Stützvorrichtung an wenigstens einem der Elemente aufweist, wobei der Scharniermechanismus aus zwei allgemein V-formigen Profilen besteht, die an ihren Spitzen schwenkbar miteinander verbunden sind. Derartige Trennwände werden insbesondere in Krankenhäusern, Rehakliniken, Altenheimen, Praxen, etc. verwendet, beispielsweise in Patientenzimmern zwischen den Betten, um den Patienten bei Besuch, Behandlungen oder bei der Pflege Abgeschiedenheit zu bieten. Nachteilig ist hierbei, daß die Trennwand auch im ausgezogenen Zustand leicht zickzackförmig angeordnet ist und die Paneele nur in einer Richtung völlig zusammengelegt werden können, während in der anderen Richtung der maximale Schwenkwinkel ca. 270° beträgt.

Es sind auch Paravents bekannt, die ein Doppelscharnier aufweisen, welches jedoch zum einen nicht blickdicht ist und bei dem zum anderen eine Verletzungsgefahr durch Einklemmen besteht.

Aufgabe der Erfindung ist es daher, eine Trennwand gemäß dem Oberbegriff zu schaffen, der in beide Richtungen jeweils um 360° faltbar ist und gleichzeitig auch im Scharnierbereich blickdicht ist.

Diese Aufgabe wird erfindungsgemäß dadurch gelöst, daß die Sichtschutzflächen im oberen Seitenbereich jeweils einen vertikal nach unten weisenden Zapfen und im unteren Seitenbereich einen vertikal nach oben weisenden Zapfen aufweisen und wobei ein 8-förmiges Rohr vorgesehen ist, welches die Zapfen zweier benachbarter Sichtschutzflächen aufnimmt.

Die Zapfen sind somit in dem 8-förmigen Rohr drehbar angeordnet, wobei durch das so gebildete Scharnier eine Drehung zweier Sichtschutzflächen relativ zueinander um eine vertikale Achse um 360° ermöglicht wird. Gleichzeitig verhindert das zwischen den Sichtschutzflächen angeordnete 8-förmige Rohr ein Durchblicken durch den Scharnierbereich.

Eine Ausbildung der Erfindung besteht darin, daß die Sichtschutzflächen jeweils einen oberen und einen unteren Verbindungswinkel aufweisen, wobei die oberen Verbindungswinkel jeweils einen vertikal nach unten weisenden Zapfen und die unteren Verbindungswinkel jeweils einen vertikal nach oben weisenden Zapfen aufweisen.

Eine bevorzugte Weiterbildung der Erfindung besteht darin, daß die oberen und/oder unteren Verbindungswinkel jeweils eine Verzahnung aufweisen, wobei die beiden benachbarten Verzahnungen ineinandergreifen.

Hierdurch wird eine gleichmäßige Drehbewegung im Scharnierbereich sichergestellt.

Es liegt im Rahmen der Erfindung, daß in dem 8-förmigen Rohr im Eingriffsbereich der Zapfen eine Gleithülse vorgesehen ist.

Diese Gleithülse, welche aus einem Material mit möglichst geringem Reibkoeffizienten besteht, beispielsweise aus Polyamid, stellt eine leichte Faltbarkeit der Paneele über eine lange Lebensdauer sicher.

Eine vorteilhafte Ausgestaltung der Erfindung besteht darin, daß an mindestens einem der Sichtschutzelemente eine Stützvorrichtung vorgesehen ist.

In diesem Zusammenhang ist es vorteilhaft, daß die Stützvorrichtung eine Rolle, vorzugsweise eine schwenkbare bzw. feststellbare Rolle aufweist.

Es ist auch zur Erfindung gehörig, daß die Trennwand an einem Trennwandwagen befestigbar ist.

Auf diese Weise kann auch in Bereichen, wo keine Wand zum Befestigen der Trennwand vorgesehen ist, eine Trennwand aufgestellt werden. Der Trennwandwagen trägt eine erste Sichtschutzfläche, an die sich die weiteren Sichtschutzflächen anschließen.

Nachfolgend wird eine Ausführungsbeispiel der Erfindung anhand von Zeichnungen erläutert.

Es zeigen
- Fig. 1: eine erfindungsgemäße Trennwand, bei der die Sichtschutzflächen einen Winkel von 180° einschließen,
- Fig. 2: eine erfindungsgemäße Trennwand, bei der die Sichtschutzflächen einen Winkel von weniger als 180° einschließen,
- Fig. 3: eine Detailansicht des Schamierbereichs der erfindungsgemäßen Trennwand,
- Fig. 4: eine geschnittene Darstellung des Scharnierbereichs der erfindungsgemäßen Trennwand.

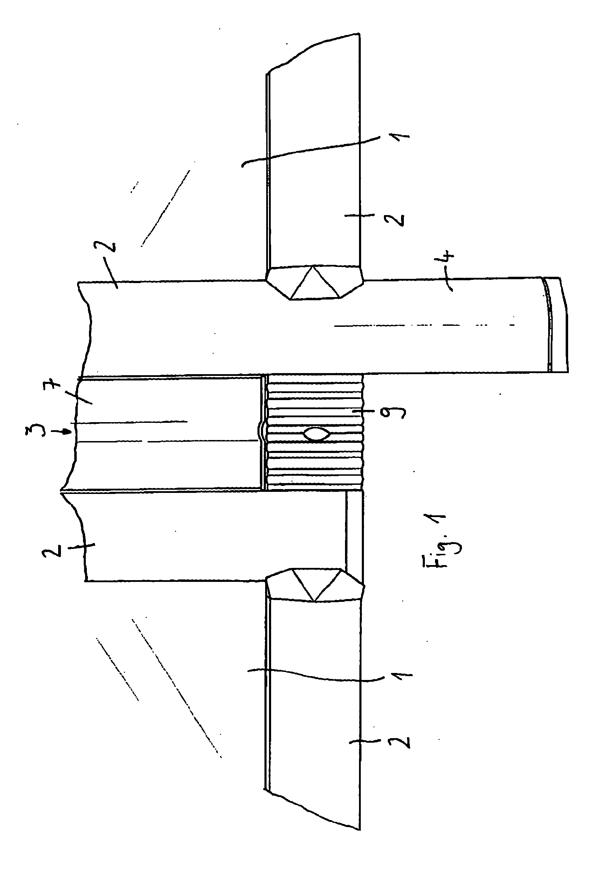

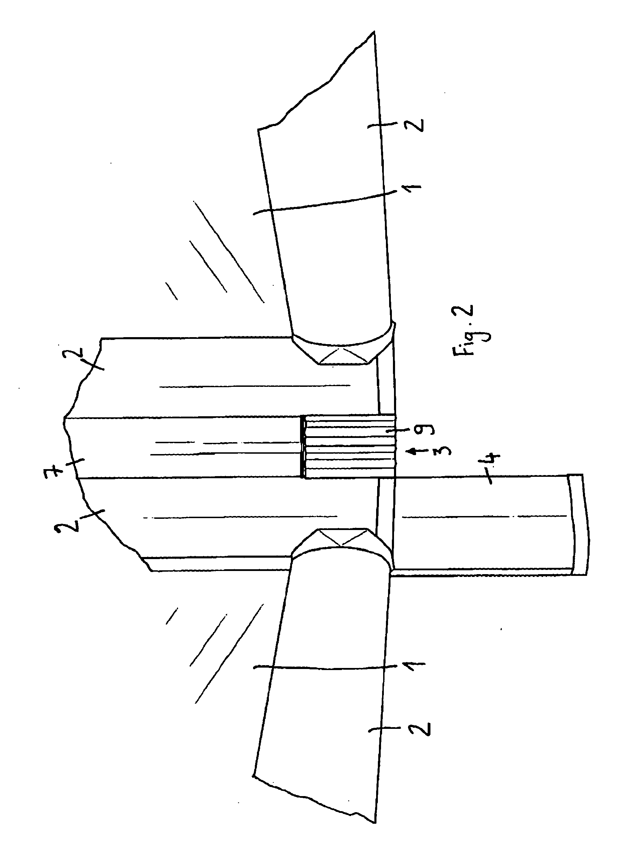

Wie aus den Fig. 1 und 2 ersichtlich, weist die Trennwand mindestens zwei Sichtschutzflächen 1 auf, die in einem Rahmen 2 angeordnet sind. Zwischen jeweils zwei benachbarten Sichtschutzflächen 1 ist jeweils ein Scharnier 3 angeordnet, das es ermöglicht, die Sichtschutzflächen 1 um eine vertikale Achse jeweils um 180° in beide Richtungen zu schwenken. Dies ermöglicht es, die Sichtschutzflächen 1 platzsparend zu einem Paket zusammenzufalten, wenn die Trennwand nicht benötigt wird.

Weiterhin sind an einigen der Sichtschutzflächen 1 Stützvorrichtungen 4 vorgesehen, die beispielsweise mit drehbaren und feststellbaren Rollen versehen sein können.

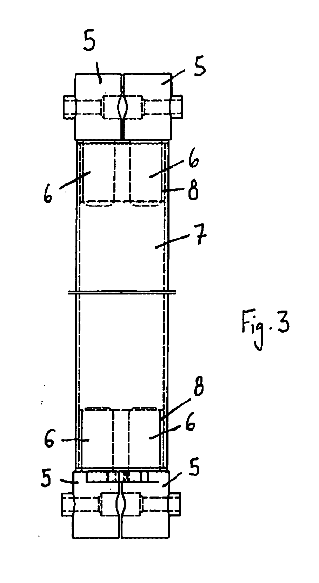

Der Aufbau des Scharniers 3 der erfindungsgemäßen Trennwand ist aus Fig. 3 zu erkennen. Die Sichtschutzflächen 1 weisen jeweils einen oberen und einen unteren Verbindungswinkel 5 auf, wobei die oberen Verbindungswinkel 5 jeweils einen vertikal nach unten weisenden Zapfen 6 und die unteren Verbindungswinkel 5 jeweils einen vertikal nach oben weisenden Zapfen 6 aufweisen. Diese Zapfen 6 greifen in ein 8-förmiges Rohr 7 ein, in dem sie frei drehbar sind. Um eine leichte Drehbarkeit und eine lange Lebensdauer sicherzustellen, ist in dem 8-förmigen Rohr 7 im Eingriffsbereich der Zapfen 6 eine Gleithülse 8, beispielsweise aus Polyamid, vorgesehen.

Weiterhin ist zu erkennen, daß die unteren Verbindungswinkel jeweils eine Verzahnung 9 aufweisen, wobei die beiden benachbarten Verzahnungen 9 ineinandergreifen.

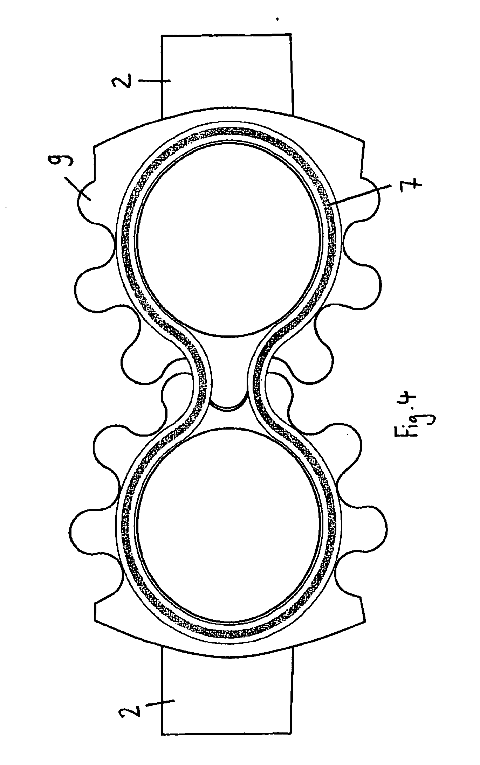

Fig. 4 zeigt sowohl das 8-förmige Rohr als auch die ineinandergreifenden Zahnscheiben 9 der beiden Verbindungswinkel 5.

## Patentansprüche

1. Trennwand, deren eine Seitenkante an einer Wand oder dergleichen befestigbar ist, welche aus mindestens zwei Sichtschutzflächen (1) besteht, die schwenkbar jeweils an einer Seitenkante mit Hilfe eines Scharniermechanismus verbunden sind, **dadurch gekennzeichnet, daß** die Sichtschutzflächen (1) im oberen Seitenbereich jeweils einen vertikal nach unten weisenden Zapfen (6) und im unteren Seitenbereich einen vertikal nach oben weisenden Zapfen (6) aufweisen und wobei ein 8-förmiges Rohr (7) vorgesehen ist, welches die Zapfen (6) zweier benachbarter Sichtschutzflächen (1) aufnimmt.

2. Trennwand gemäß Anspruch 1, **dadurch gekennzeichnet, daß** die Sichtschutzflächen (1) jeweils einen oberen und einen unteren Verbindungswinkel (5) aufweisen, wobei die oberen Verbindungswinkel (5) jeweils einen vertikal nach unten weisenden Zapfen (6) und die unteren Verbindungswinkel (5) jeweils einen vertikal nach oben weisenden Zapfen (6) aufweisen.

3. Trennwand gemäß Anspruch 1, **dadurch gekennzeichnet, daß** die oberen und/oder unteren Verbindungswinkel (5) jeweils eine Verzahnung (9) aufweisen, wobei die beiden benachbarten Verzahnungen (9) ineinandergreifen.

4. Trennwand gemäß Anspruch 1, **dadurch gekennzeichnet, daß** in dem 8-förmigen Rohr (7) im Eingriffsbereich der Zapfen (6) eine Gleithülse (8) vorgesehen ist.

5. Trennwand gemäß Anspruch 1, **dadurch gekennzeichnet, daß** an mindestens einem der Sichtschutzelemente (1) eine Stützvorrichtung (4) vorgesehen ist.

6. Trennwand gemäß Anspruch 5, **dadurch gekennzeichnet, daß** die Stützvorrichtung (4) eine Rolle aufweist.

7. Trennwand gemäß Anspruch 6, **dadurch gekennzeichnet, daß** die Rolle schwenkbar ist.

8. Trennwand gemäß Anspruch 6, **dadurch gekennzeichnet, daß** die Rolle feststellbar ist.

9. Trennwand gemäß Anspruch 1, **dadurch gekennzeichnet, daß** die Trennwand an einem Trennwandwagen befestigbar ist.
